# EUROPEAN PATENT APPLICATION

(11) **EP 0 825 106 A1**
(43) Date of publication of application: **25.02.1998**
(21) Application number: 97904685.1
(22) Date of filing: 03.02.1997
(51) Int. Cl.: B64D 1/22

(54) **DEVICE FOR HAULING FELLED TREES BY HELICOPTER**

(30) Priority: 15.03.1996 RU 96104231
(71) Applicant: Aktsionernoe Obschestvo Zakrytogo Tipa " Aerinn", Moscow, 117571 (RU)
(72) Inventor: CHENTSOV, Vitaly Georgievich, Moscow, 117415 (RU)
(74) Representative: BOVARD AG - Patentanwälte
(86) International application number: RU9700017
(87) International publication number: WO9733791

(57) **Abstract**

The device for hauling felled trees by helicopter comprises a cable attached to the helicopter hull and a grab attached to the lower part of the cable. The distance between the cable-hull attachment points and the grab lies in the range 1.78 - 7.27 times the diameter of the helicopter rotor. The pincer-type grab is provided with a hydraulic or electrical drive and at least two air fans arranged on the grab symmetrically in relation to the cable attachment points.

## Description

### FIELD OF TECHNOLOGY.

The present invention relates to the equipment of aircrafts ensuring the lifting of objects from the surface of the ground in the process of flight and their transportation. Especially, this invention relates to a device for helicopter logging of long objects and, namely, felled trees. Thus this invention relates to the process of selective lumbering timber and its transportation from almost inaccessible places.

### PRIOR ART.

The Helicopter logging of both felled rough trees and previously trimmed ones (cross-cut into range of log sizes) is widely used in timber cutting and especially in remote areas or almost inaccessible ones. Helicopter logging includes helicopter hovering, grabbing the object with a device lowered out of the helicopter, and ascent of the helicopter together with the grabbed object and transferring it to the place of discharging.

The well-known devices for helicopter logging of felled trees comprise a sling attached to the fuselage of a helicopter and a grapple attached to the lower end of the sling.

Helicopter logging permits the transfer of felled trees without additional expenses of timber felling for ground access to the areas of logging. Such logging is more acceptable and satisfactory from an ecological point of view as compared with the ground logging.

However the problem of air transport affecting the growing vegetation while using helicopter logging appears. When a helicopter is hovering over the place of grabbing a felled tree or a tree meant for felling, the powerful air flows created by the helicopter's main rotor (rotor wash) begin to affect the growing flora, e. g. the crowns of the trees and bushes and top-soil.

At the same time, the attempts of considerable lengthening of the carrying sling for attenuation or complete elimination of aerodynamic effect on the growing vegetation result in the complication of piloting and fulfilling the process of grabbing the tree to be hauled. On the other hand, such attempts lead to unjustified increase of the sling weight and the weight of the whole grabbing device which finally results in increasing expenses of the consumed fuel, reduction of labor productivity and flight safety. The latter counts especially in the mountainous districts and in the areas of steep slopes (ravines, hollows etc.)

### SUMMARY OF INVENTION.

The purpose of this invention and its technological result is improving ecological characteristics by means of elimination or, more exactly, reduction of aerodynamic effect of the air flows produced by the helicopter's main rotor on the vegetation growing in the area of logging and also increasing economical efficiency, productivity and flight safety through the optimum choice of the length of the sling in the grabbing device for different climatic conditions and various topographies.

Another purpose of this invention is providing (facilitation of) conditions for simultaneous logging and transportation of several felled trees and/or cross-cut ranges of log sizes which can be oriented in different ways or rather remote from each other at the moment of felling or cross-cutting.

The above-mentioned purposes and technological results can be achieved due to the fact that in the device for helicopter logging comprises:
- the sling attached to the fuselage of a helicopter, and
- the grapple attached to the lower end of the sling the distance between the point of the sling attachment on the fuselage and the point of grapple attachment ranges in value from 1.78 to 7.27 diameter of the helicopter main rotor.

The major factor taken into consideration regarding the structural features of logging helicopters is the height of the column of aerodynamic influences of the whirls arising under the helicopter fuselage during its hovering. Research (including the research of the applicant) showed that the height of the column for all the existing types of cargo helicopters, irrespective of their load-carrying capacity and their engine power, can be approximately assumed as three diameters of the helicopter main rotor. The height of the column is equal approximately to 100 m for the MI-8 helicopter.

Flight experiments and simulations showed the validity of the range of coefficients correcting the L/D ratio (increasing or decreasing), where L is the length of the sling and D is the diameter of the helicopter main rotor, in the range which does not result the aerodynamic influences destroying the foliage of the trees in the areas of logging and causing irreversible changes of the soil microflora.

The following factors influence the correction of the above-mentioned ratio mostly. They are:
- forest quality (the height and thickness of the trees crowns, ramification of the root systems of the trees, presence of rare species of bushes, underbrush and other flora and their qualitative composition);
- structure and condition of the soil (composition and humidity);
- steepness of the slopes in the areas of logging, and also
- possibility of presence of a ground observer in the area of logging.

The range of the L/D ratio from 1.78 to 7.27 was obtained while taking into consideration the influence of the above-mentioned factors.

It is necessary to explain that it does not seem possible to perform the helicopter logging when the ratio of L/D is less than 1.78 because of the limited external visibility for the pilot and impossibility of presence of a ground observer in the work zone because the aerodynamic influence is substantial.

It is most advisable to use the minimal ratio of L/D lying between the limits 1.78 and 2.80 in the areas where the ecological demands are not the major ones and also in the steppe and forest-steppe areas where high quality timber to be hauled by air transport is rather rare.

For the areas where the density of the forest massive is medium and flat the preferable range of the ratio of L/D lies between the limits 2.8 and 5.0. In this case it is most advisable for logging to be carried out through grabbing several trees or logs simultaneously.

In the case of using helicopter logging in the equatorial forests and especially in mountainous areas the most acceptable values of the above mentioned ratio are the maximum ones, i.e. over 5.0.

If the ratio of L/D is over 7.3 the logging is inadvisable from an economical point of view according to the above-mentioned reasons.

The preferable version of the invented device is the following. The grapple is designed as tongs provided with an actuator connected with the power source through the feed lines though the above-mentioned ratio ensures achieving the main purpose of the invention even if the grapple is designed according to other versions, e.g. sling grapple, choker etc.

The above-mentioned source of power can be placed on the helicopter or it can be designed autonomous depending on the logging conditions and technical equipment (power availability) of the felling area in particular.

One of the preferable version of the invention is based on the use of the hydraulic actuator of the grapple. The version with the electrical actuator is also belongs to the preferable ones. These versions of the actuator should be chosen depending on the types of commonly used power sources employed in the given helicopter systems or in the mechanisms used in the felling areas. Correspondingly, the source of power and feed lines connecting the source of power with the actuator of the grapple and the other necessary units become the elements of air-borne or independent hydro- or electrical systems ( a hydraulic amplifier, a pump, pipelines for a hydraulic system, an electric generator, an electric engine and cables for an electric system).

The version of the grapple of the invention providing (facilitating) the simultaneous logging and transportation of several felled trees or cross-cut logs is equipped with at least two air fans placed on the grapple symmetrically relative to the point of its attachment to the sling. In case of impossibility (or difficulty) of controlling the grapple from the ground in the logging area the flows supercharged by the fans permit to ensure a turn of the grapple and its orientation to the next object of logging.

It is preferable to use the electrical drives of air fans which could be connected to the power source by the additional feed lines. If the power source is located on-board it is advisable to integrate the feed lines of the grapple's actuator and the air fans with the sling.

### BRIEF DESCRIPTION OF THE DRAWING.

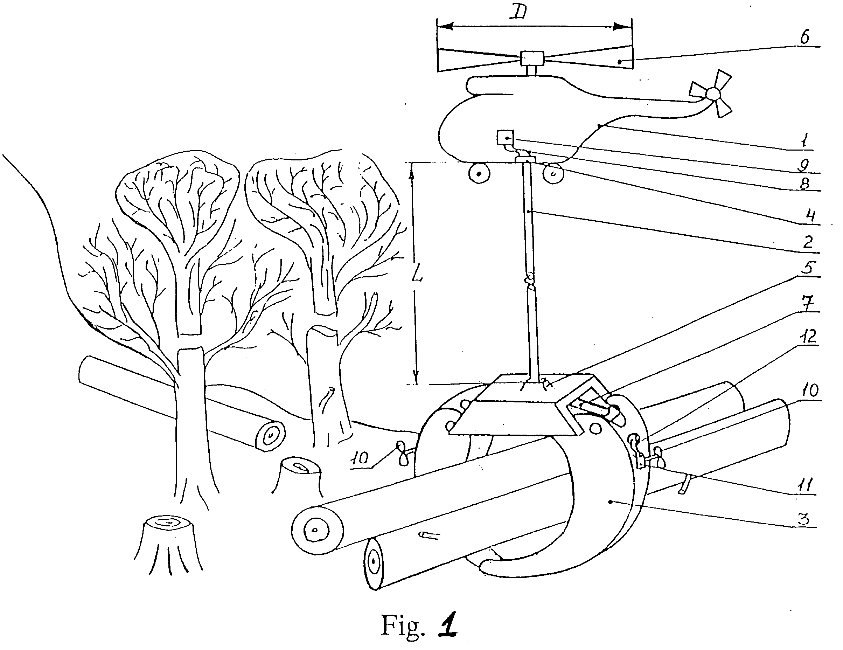

The invention is illustrated with the drawing (Fig. 1) showing the device for helicopter logging according to this invention.

### THE BEST VERSIONS OF THE INVENTION DESIGNS.

The device for helicopter logging shown in the picture contains a sling 2 attached to the fuselage of a helicopter 1 and a grapple 3 attached to the lower end of the sling. The distance L between points 4 and 5 of attaching the sling 2 with the fuselage of the helicopter 1 and the grapple 3 correspondingly lies within the range from 1.78 to 7.27 diameter D of the helicopter main rotor 6.

The grapple 3 shown in the drawing is designed as tongs with an actuator 7 according to the pictured version of the invention. The grapple operates via feed lines 8 connected with the power source 9. According to this version of the invention the latter is placed on-board. As it has been mentioned before the power source 9 can also be autonomous in other versions of the invention and be located either in the area of the grapple 3 or merely on the ground. As it has been mentioned before the actuator of the grapple can also be designed in many versions.

In the pictured version of the design which has been made for facilitation of the simultaneous logging and transportation of several felled trees or cross-cut logs the grapple is equipped with two air fans 10 placed symmetrically relative to the point 5 of attachment of the sling 2 to the grapple 3. Twin fan's location (not less than two fans should be used) is provided; the axes of the fan's rotors in pairs should be turned to each other at the angle of 180°. The drives 11 of the fans are electrical and the additional feed lines 12 are connected with the above-mentioned source of power 9.

The device operates as follows. The aircraft (e.g. the helicopter 1 with the sling 2 and grapple 3) is called after/during the felling, pruning and cross-cutting of the trees into logs. The pilot chooses the place and height of hovering of the helicopter 1 over the area of logging in accordance with the data of the on-board remote control system and taking into consideration possible corrections of the ground observer. The pilot also controls the grapple 3 from the helicopter cockpit. The grapple control can be carried out and / or corrected by members of the ground crew if necessary in case of poor visibility (meteorological conditions worsening, great density of the crowns of trees etc.).

The length of the sling 3 should be chosen within the limits mentioned in the description of this invention depending on specific conditions and can be changed within the above-mentioned range while setting a flight mission task in view of both structural features of the aircraft and biological, meteorological and climatic conditions, the geological features of the landscape in the work area and also ecological criteria of reduction or complete elimination of affecting the environment by the air transport in particular.

### INDUSTRIAL APPLIANCE.

The invention relates to the equipment of aircrafts ensuring the lifting of objects from the ground surface during the flight and its transportation and namely, to the devices for helicopter logging which can be applied industrially in the process of selective lumbering and transportation of timber from almost inaccessible areas and especially in the conditions of strict limitations on the influence of the air transport on the environment.

## Claims

1. A device for helicopter logging containing a sling attached to the copter body and a grapple attached to the lower end of the sling, *characterized* in that the distance between the point of the sling attachment to the helicopter body and the point of the grapple attachment to the sling is within the range from 1.78 to 7.27 of the helicopter's main rotor diameter.

2. A device for helicopter logging according to claim 1, *characterized* in that the grapple is designed as tongs equipped with an actuator connected to a power source by feed lines.

3. A device for helicopter logging according to claim 2,*characterized* in that the power source is mounted on the helicopter.

4. A device for helicopter logging according to claim 2, *characterized* in that the power source is an autonomous unit.

5. A device for helicopter logging according to claim 2, *characterized* in that the grapple actuator is a hydraulic unit.

6. A device for helicopter logging according to claim 2, *characterized* in that the grapple actuator is an electric unit.

7. A device for helicopter logging according to claim 1 or 2, *characterized* in that the grapple is equipped with at least two air fans mounted on the grapple symmetrically relative to the point of its attachment to the sling.

8. A device for helicopter logging according to claim 7, *characterized* in that the drives of the air fans are electrical units, and their additional feed lines are connected to the power source.

9. A device for helicopter logging according to clain 7 or 8, *characterized* in that the grapple actuators and air fans' feed lines are connected with the sling.
